# EUROPEAN PATENT APPLICATION

(11) **EP 2 371 204 A1**
(43) Date of publication of application: **05.10.2011**
(21) Application number: 09820296.3
(22) Date of filing: 01.10.2009
(51) Int. Cl.: A01D 46/30

(54) **MACHINE FOR AUTOMATICALLY HARVESTING FRUIT CULTIVATED IN ROWS**

(30) Priority: 16.10.2008 ES 200802923
(71) Applicant: Soluciones Roboticas Agricolas Slu, 21440 LEPE (Huelva) (ES)
(72) Inventor: BRAVO TRINIDAD, Juan, E-21440 Lepe (Huelva) (ES); BRAVO TRINIDAD, José, Luis, E-21440 Lepe (Huelva) (ES)
(74) Representative: Carpintero Lopez, Francisco
(86) International application number: PCT/ES2009/070413
(87) International publication number: WO 2010/043740

(57) **Abstract**

The invention relates to a machine for the automatic harvesting of fruits cultivated in rows, comprising an autonomous vehicle, with a tubular structure (2), formed by stringers (5) attached to one another by means of crosspieces (6), and with wheels (3) encompassing several crop rows (4), incorporating autonomous and independent robotic arms (7) controlled by means of a common processor, being assembled on a platform (8) moving on a guide (9), and the end of which has a viewing and positioning system, and has a curved receptacle (13) in the form of a funnel (14) provided with a groove (15) with an obliquely arranged blade (16). The viewing and positioning system comprises a camera (10), a contact sensor (11) and a distance sensor (12).

## Description

### Object of the Invention

As expressed in the title of the present specification, the invention relates to a machine for the automatic harvesting of fruits cultivated in rows.

More particularly, the object of the invention is focused on a machine for the harvesting of small fruits cultivated in rows, such as strawberries or the like, which provides to the function for which it is intended considerable advantages and innovative technical features, in addition to others inherent to its organization and constitution, which will be described in detail below and which involve an outstanding improvement compared to the systems currently used for the same purpose.

### Field of Application

The field of application of the present invention is comprised within the agricultural sector, specifically within the industry dedicated to the manufacture of agricultural machinery and particularly of robotized systems for harvesting.

### Background of the Invention

As is known, the use of machinery which allows automating certain agricultural functions is increasingly widespread, however, there are some crops which are still treated in a completely manual manner due to the delicate characteristics of the product.

This is the case of strawberries or other similar fruits, the object of the present invention being to provide the state of the art with an automated system for the harvesting thereof, achieving the evident advantages of speed and labor reduction that this entails.

It must furthermore be emphasized that the applicant is not aware of the existence of any other invention which is similar or has similar technical, structural and configuration features.

### Description of the Invention

The machine for the automatic harvesting of fruits cultivated in rows proposed by the present invention is therefore configured in itself as an outstanding novelty within its field of application since, in accordance with its creation, an innovative system for the completely automated harvesting of small fruits with a delicate handling, such as strawberries or the like, is specifically achieved, the characterizing details which make it possible being suitably included in the final claims attached to the present specification.

Specifically, the proposed machine is formed by a self-propelled and autonomous vehicle which, formed by a tubular structure, encompasses several crop rows, traveling over them simultaneously.

Said vehicle has a plurality of robotic arms, in charge of the individual collection of the fruits, oriented towards both sides of each row, each of them operating autonomously and independently from the rest.

To that end, each arm is assembled on a platform which moves on a guide. Once the arm has detected a fruit by means of its viewing system, the processor controlling them will be in charge of maintaining the relative position between the fruit and the arm, as well as of controlling the servos of the arm to guide its end or "hand" until placing it just below the fruit. When the contact sensor or the distance sensor with which it is provided indicates it, the arm will retract, cutting the fruit and making it fall into the mentioned hand, formed by a receptacle provided for such purpose, subsequently depositing it in collection box or, alternatively, directly on a conveyor belt suitably located below the machine, between each row.

It should also be pointed out that the end of each arm is provided with a camera, forming the mentioned viewing system, in addition to the aforementioned contact sensor and the distance sensor. Thus, the contact sensor will be tripped when the receptacle strikes the bed or when the distance sensor detects the fruit at the suitable distance. At that time, the central processor controlling the overall operation of the machine will order the arm to rise and, as a result of the curved shape thereof, if the latter is touching the side of the bed, it will rise rubbing against it, whereas the fruit will be located at the inner part of the receptacle, its peduncle being guided to a groove designed for the purpose of preventing the entrance of fruits (or fingers) therein and allowing the entrance of the peduncle of the fruit.

A blade laterally inserted in said groove will cut the peduncle, making it fall into the receptacle.

It must also be pointed out that although each of the described arms operates independently, it is contemplated that, optionally, the machine can have a central processing system performing synchronization tasks for starting and stopping, diagnosis, etc.

Thus, the vehicle will travel over the entire length of the rows while the robotic arms collect the fruits and deposit them either in the described boxes which, once full, will pass to a conveyor belt, to be suitably transported and subsequently distributed, or directly in the conveyor belt to be collected in boxes.

Depositing fruits in the boxes or in the conveyor belts can be achieved, for example, by means of incorporating a servo which overturns the receptacle, dumping the product on the box or conveyor belt.

Upon reaching the end of the row, the machine will stop and an operator, after collecting the boxes of product, will place the vehicle in position to travel over the following group of rows.

The described machine for the automatic harvesting of fruits cultivated in rows is therefore an innovative structure with structural and constitutive features unknown up until now for such purpose, which reasons, added to its practical usefulness, provide it with sufficient grounds for obtaining the exclusive right which is sought.

### Description of the Drawings

To complement the description which is being made and for the purpose of aiding to better understand the features of the invention, a set of drawings is attached to the present specification as an integral part thereof, in which the following has been depicted with an illustrative and non-limiting character:
Figures 1 and 2 respectively show a side elevational view and a plan view of an embodiment of the machine for the automatic harvesting of fruits cultivated in rows object of the invention, suitably placed on a crop in rows, the main parts that it consists of as well as the configuration and arrangement thereof being observed.
Figure 3 shows a detailed schematized view of the end of one of the robotized arms with which the machine is provided, according to the invention, the elements that it comprises and the configuration and arrangement thereof being observed.
Figures 4-A and 4-B respectively show perspective, front and rear views of the receptacle or "hand" with which the arms are provided at their end and by means of which the fruits are cut and collected.

### Preferred Embodiment of the Invention

In view of the mentioned figures and according to the numbers adopted, a preferred embodiment of the invention comprising the parts and elements indicated and described in detail below can be observed therein.

Thus, as observed in said figures, the machine (1) in question consists of a self-propelled and autonomous vehicle formed by a tubular structure (2) provided with wheels (3) which encompasses several crop rows (4), traveling over them simultaneously.

Said structure (2), essentially formed by respective parallel and longitudinal stringers (5) which are attached to one another by means of crosspieces (6), incorporates a plurality of robotic arms (7) which are oriented towards both sides of each crop row (4), each of them operating autonomously and independently, being controlled by means of a common processor (not depicted).

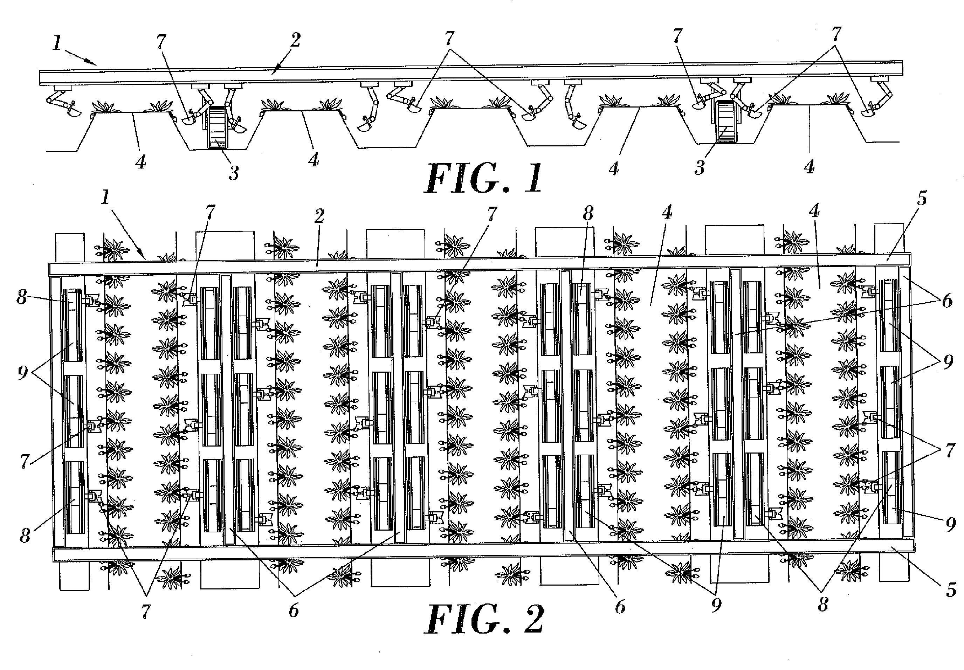

As observed in Figure 2, each of the mentioned arms (7) is assembled on a platform (8) moving over a guide (9), said guides being suitably distributed on both sides of the mentioned crosspieces (6).

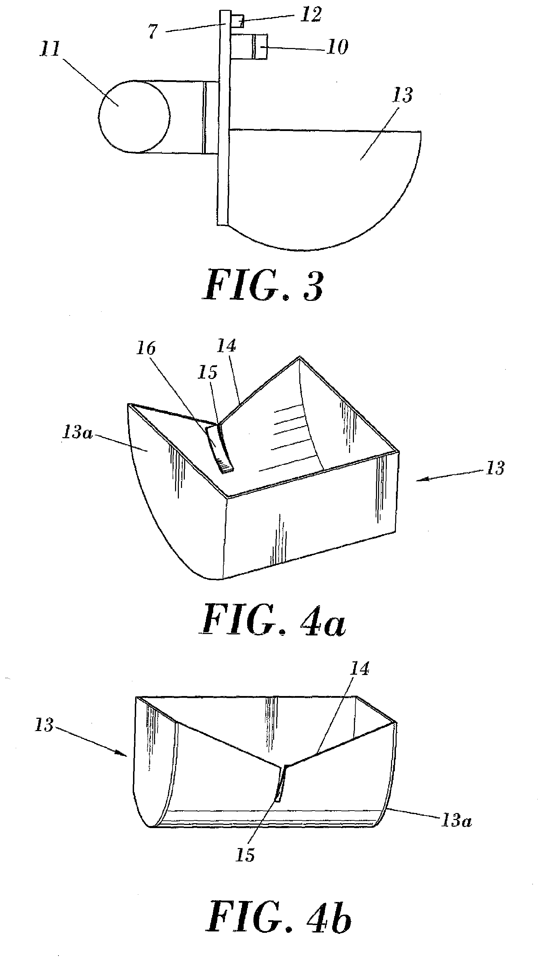

In turn, as can be observed in Figure 3, the end of the arms is provided with a camera (10), a contact sensor (11) and a distance sensor (12), forming the viewing and positioning system thereof, also having a receptacle (13) for collecting the fruit.

Considering Figures 4-A and 4-B, it can be observed how said receptacle (13) has, in its front face (13a), a curved shape in the form of a funnel (14) which is provided at its center with a groove (15), the dimensions of which are the exact ones to allow the entrance therein of only the peduncle and not of the fruit to be collected, which, furthermore, internally has an obliquely arranged blade (16) for cutting cut such peduncle.

Thus, the operation of the machine (1) occurs such that once the arm has detected a fruit by means of its viewing system formed by the camera (10), the processor controlling the arms (7) will be in charge of maintaining the relative position between the fruit and the arm (7), as well as of controlling the servos of the arm to guide the receptacle (13) located at its end until placing it just below the fruit.

When the contact sensor (11) or the distance sensor (12) indicates it, the arm will retract and rise and, as a result of the curved shape of the receptacle (13), if the latter is touching the side of the bed, it will rise rubbing against it and the fruit will be located at the inner part of the receptacle, its peduncle being guided through the area of funnel (14) to the groove (15), being cut upon rubbing against the blade (16) and falling therein. The arm (7) subsequently deposits the fruit in a box or directly on a conveyor belt.

Depositing fruits in the boxes or in the conveyor belts can be achieved, for example, by means of incorporating a servo which overturns the receptacle, dumping the product on the box or conveyor belt.

Once the process has been performed in the entire area encompassed by the machine, the latter is moved to act in the same manner on the following group of crop rows (4).

Having sufficiently described the nature of the present invention as well as the manner of putting it into practice, it is not considered necessary to further explain it for any person skilled in the art to understand its scope and the advantages derived therefrom, stating that, within its essential nature, it can be carried out to practice in other embodiments which differ in detail from the one indicated as an example and which are likewise covered by the protection that is sought, provided that its fundamental principle is not altered, changed or modified.

## Claims

1. Machine for the automatic harvesting of fruits cultivated in rows, formed by a self-propelled and autonomous vehicle encompassing at least one crop row, comprising at least one robotic arm (7) oriented towards the side of the crop row (4) which incorporates
- a viewing camera (10) for detecting the fruit
- a contact sensor (11)
- a distance sensor (12)
- a receptacle (13) for collecting the fruit capable of cutting its attachment to the plant and collecting said product.

2. Machine for the automatic harvesting of fruits cultivated in rows according to claim 1, **characterized by** incorporating multiple robotic arms (7) oriented towards the crop row or rows.

3. Machine for the automatic harvesting of fruits cultivated in rows according to claim 1, **characterized in that** the robotic arm or the multiple robotic arms (7) are assembled on a platform movable on a guide attached to the self-propelled vehicle.

4. Machine for the automatic harvesting of fruits cultivated in rows according to claim 1, **characterized in that** the receptacle (13) for collecting the fruit has, in its front face (13a), a curved shape in the form of a funnel (14) centrally provided with a groove (15) having a blade (16) for cutting the peduncle attaching the fruit to the plant.

5. Machine for the automatic harvesting of fruits cultivated in rows according to claim 1, **characterized in that** the robotic arm or arms (7) have driving servos controlled by a microprocessor receiving the data coming from the viewing camera (10) for detecting fruit, from the contact sensor (11) and from the distance sensor (12) to move the receptacle (13) closer to the fruit and collect it.

6. Machine for the automatic harvesting of fruits cultivated in rows according to claim 1, **characterized in that** the robotic arm or arms are associated with boxes for depositing the collected fruits or with conveyor belts for storing and removing the harvested products.

7. Machine for the automatic harvesting of fruits cultivated in rows according to claim 1, **characterized in that** the receptacle for collecting the fruit is pivotably attached to the robotic arm (7) and associated with a servo which forces rotating it to unload the fruit from the receptacle to the boxes or conveyor belt.
